# EUROPEAN PATENT SPECIFICATION

(11) **EP 1 699 657 B1**
(45) Date of publication and mention of the grant of the patent: **16.10.2013**
(21) Application number: 04820696.5
(22) Date of filing: 02.12.2004
(51) Int. Cl.: B60K 17/10, F16H 39/02, B62M 19/00, B62M 23/00

(54) **DEVICE FOR USE IN A VEHICLE**
VORRICHTUNG ZUR VERWENDUNG IN EINEM FAHRZEUG
DISPOSITIF DESTINE A ETRE UTILISE DANS UN VEHICULE

(30) Priority: 23.12.2003 SE 0303495
(43) Date of publication of application: 13.09.2006
(73) Proprietor: ÖHLINS RACING AB, 194 27 Upplands Väsby (SE)
(72) Inventor: GUSTAVSSON, Leif, 370 34 Holmsjö (SE)
(74) Representative: Hansson, Anders Max
(86) International application number: PCT/SE2004/001782
(87) International publication number: WO 2005/061261

(56) References cited:
- EP-A1- 1 151 913
- WO-A1-99/61302
- US-A- 5 873 428

## Description

The present invention relates to a device for use in a vehicle, for transmitting drive force from at least one first wheel to at least one second wheel of the vehicle by means of a hydrostatic transmission arrangement.

Within patent literature, it is previously known to propose vehicles, for example motorcycles and variants thereof, having hydrostatic driving of the front wheel from the rear wheel. Reference can also be made to vehicles which are under development and which are found, inter alia, in testing activities. Reference is also made to an ATV (All Terrain Vehicle), which is a four-wheeled motorcycle.

In known arrangements, problems can exist with the very high build-up of heat or energy which occurs in the hydrostatic system in various driving scenarios with the vehicle and applications thereof. The problem arises, in particular, when the front wheel is stationary or is rotated slowly and, at the same time, the rear. wheel is actuated for high rotation speed. Such a case can occur when the front wheel is stationary and the rear wheel spins relative to the underlying/supporting surface due to acceleration, compare, for example, the case in which the underlying/supporting surface for the rear wheel is a muddy puddle or is otherwise soft and the vehicle is not therefore carried forward despite the acceleration. Various braking conditions of the front and rear wheel, with foot and hand brakes, may also give rise to the situation or application in question.

United States patent 5 873 428 is the closest prior art and shows the features of the preamble of claim 1. It discloses a hydrostatic transmission for driving a front wheel of a motorcycle comprising a hydrostatic pump delivering pressurized fluid to a conduit which in turn supplies fluid to a hydrostatic motor driving the front wheel. A pressure relief valve is provided in a bypass line between the conduit and the return line from the hydrostatic pump to control the maximum pressure that can be exerted by the pump on the motor. An operator control valve is provided in a further bypass line to allow delivery of fluid to the motor when placed in its closed position and to bypass the motor when in its open position. In European patent application 1 151 913 a front and rear wheel drive vehicle is disclosed where the front wheel is driven by a hydraulic motor. The hydraulic pressure is controlled by a hydraulic unit comprising an operation switching valve, a check valve and a pressure relief valve.

In previously known apparatus, the markedly different speeds of the wheels can cause the pressure relief valve of the pump to open and the entire quantity of oil to be rotated inside the pump. The large amount of energy which is generated in this regard has therefore to be absorbed by an increase in temperature in the pump housing and in parts of the vehicle connected thereto. The amount of energy which must then be absorbed may be of the order of magnitude of 10 kW, which means that a marked increase in temperature can occur in the pump housing and in the connecting lines and associated connecting fixtures. Owing to the high thermal temperature, the connecting lines and the fastenings might break and cause other external damage, for example personal injury. In order to solve this problem, it would be necessary in the prior art to resort to dimensioning lines, connections, etc. such that the indicated drawbacks do not materialize, but this imposes unreasonable dimensioning requirements, material type requirements, costs, etc. There is a need to obtain improved handling characteristics in respect of aerial travel (leaping with the vehicle), wheel control, tilting, etc. The object of the present invention is to solve, inter alia, the whole or parts of these problems.

The new device may principally be deemed to be characterized, inter alia, in that the arrangement comprises a hydrostatic pump, and a hydrostatic drive assembly, connected to the pump by a hydrostatic line system, for driving a wheel. Additionally included are one or more members which wholly or partially bridge or disconnect or reconnect the drive assembly. The said member(s) is/are arranged to directly or indirectly detect and/or influence driving situation(s) for the vehicle and, should a change occur, to cause or bring about the full or partial bridging or reconnection of the assembly.

In the case of a motorcycle, for example, only a small amount, for example about 3%, of the medium flow (the volume flow) needs to be bridged or shunted past the assembly, which small amount produces a substantial drop in the medium pressure, for example from about 350 bar to values below 5 bar. After this small amount of medium diversion, the driving of the rear wheel from the front wheel is taken over, in fact, by the ground contact of the vehicle. The small amount of medium produces, for example, only a small build-up of heat in the system, which can easily be handled. The new device further comprises a bridging duct, forming part of the hydrostatic line system, and a unit arranged in the said bridging duct and provided with one or more temperature-sensitive members. Additionally included are connecting and disconnecting members arranged in or at the bridging duct. The temperature-sensitive members can comprise one or more bodies having different thermal expansion coefficients. The connecting and disconnecting members can in this case be arranged such that they can be actuated by the body or bodies. The unit can therefore comprise a first body in the form of a fluid, for example hydraulic oil, and a second body made of metal, for example aluminium. The second body can consist of a housing or frame, enclosing a chamber for the fluid, and the thermal expansion coefficients in the fluid and the housing differ substantially. An alternative to fluid in the form of hydraulic oil can be wax(es) having well-defined melting and solidification temperatures. The connecting and disconnecting members can comprise a cone or needle, arranged such that it can be actuated by the aforementioned first body, and a seat belonging to the cone or needle. The second body and the cone can form a common part arranged sealed with sealing members inside the frame or housing of the unit. In a first thermal expansion case the cone seals the seat and keeps the bridging duct closed, whilst in a second thermal expansion case it keeps the bridging duct open. The body or bodies is/are chosen with thermal expansion coefficients and the cone/needle and the seat are arranged to allow connections and disconnections within a small temperature range, for example a temperature range of about 5°. The device is preferably incorporated in a vehicle in the form of a motorcycle, in which the wheels normally make contact with the ground or supporting surface and the bridging by the bridging member(s) causes only a minimal drop in pressure in a pressure produced by the pump. In an alternative embodiment, use is made of a control function/control valve, computer function, etc. for the bridging or disconnection and reconnection. Minimal reconnection times of 0.1-1.0 seconds will be obtainable.

Further embodiments of the new device emerge, inter alia, from the following subclaims.

As a result of the above, construction-related advantages are gained by the possible use of bleeding or leakage functions. Only a small change in medium flow is required to be made relative to the case in which normal drive obtains. This offers advantages in the return to normal running, since the system is rapidly able to assume maximum propulsion function after the disconnection. The vehicle is usable, above all, in a two-wheeled motorcycle, but can also be used in different variants of motorcycles and four-wheeled vehicles according to the above. The hydrostatic system can be equipped with a bridging arrangement which can comprise pressure-detecting members, which react to permitted maximum pressure in the system, and a non-return valve arrangement, which reacts to whether the front wheel (the driven wheel) is assigned a higher speed than the rear wheel (the driving wheel). The drive function from the rear wheel to the front wheel shall obtain when the vehicle is driven in the forward direction. So as not unduly to affect the vehicle when reversing, the system can be arranged, in a known manner, such that any such influence is avoided. Improved aerial travel characteristics can be achieved, since the control and actuating situation can be maintained, thereby giving improved functioning. The post-reduction disconnection can be made immediately prior to impact with the ground and the connection can be realized a very short time after contact with the ground.

A currently proposed device according to the present invention will be described below with simultaneous reference to the appended drawings, in which;
- Figure 1: shows from above and in basic representation a hydrostatic arrangement on a two-wheeled vehicle, in which a rear wheel shall give rise to propulsion force on a front wheel by means of a hydrostatic system,
- Figure 2: shows in vertical section a structural illustrative embodiment of a unit forming part of the hydrostatic arrangement according to Figure 1, having a temperature-detection function and a connection and disconnection function for a bridging line in the hydrostatic arrangement, and
- Figure 3: shows in vertical section a further illustrative embodiment having a regulating valve, which can provide variable regulation of the medium flow.

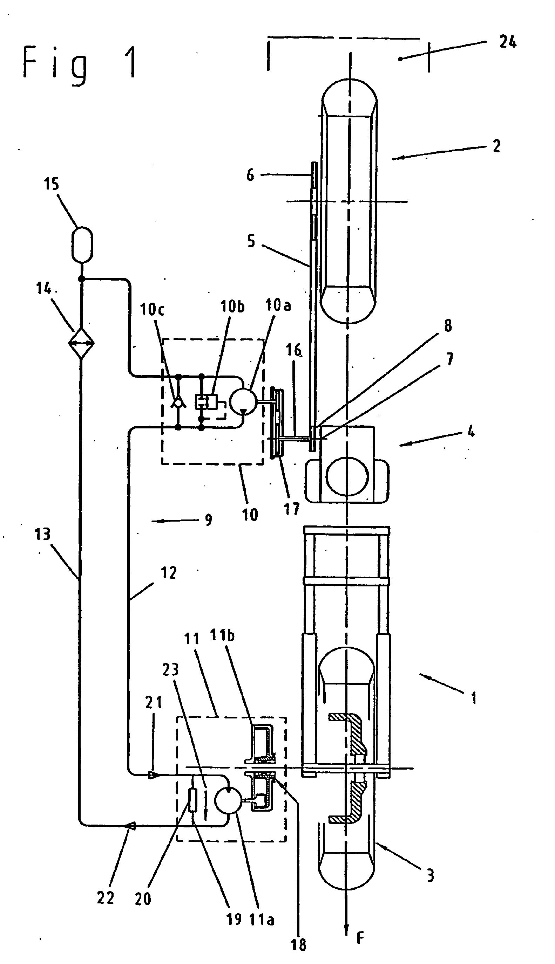

In Figure 1, a motorcycle is indicated diagrammatically by 1. The motorcycle comprises a rear wheel 2 and a front wheel 3. The motorcycle also comprises an engine 4 (shown in basic representation), which can be of a type which is known per se. The rear wheel is provided with a chain drive and the chain is symbolized by 5 and is driven from the gear ring 6 of the rear wheel. The gearbox of the vehicle is symbolized by 7 and a gearwheel assigned to the chain 5 has the notation 8. A pump arrangement forming part of the hydrostatic system 9 is indicated by 10. The pump arrangement is arranged to drive a drive assembly 11 for the front wheel 3. The pump arrangement and the assembly are connected to each other by a hydrostatic line system comprising a high-pressure line or high-pressure hose and a low-pressure line or low-pressure hose 13. On the low-pressure side, in the illustrative embodiment shown, a cooler 14 and a pressure accumulator 15 are fitted. The cooler 14 can form part of the arrangement if the motorcycle is to be driven in a hot climate, for example a desert climate.

The said gearwheel 8 is connected by a shaft 16 to a drive device 17 for the said pump arrangement 10. The drive device can be constituted by a type which is known per se and can comprise a chain running in an oil bath. The drive device drives the pump 10a in a manner which is known per se. The pump arrangement also comprises a pressure relief valve, which enters into operation when there is maximum pressure over or in the line 12. The valve 10b can be of a type which is known per se and does not concern the present invention per se. In addition, the pump arrangement 10 comprises a non-return valve 10c, which enters into operation where the front wheel 3 rotates faster than the rear wheel 2, for example, in vehicle turning, various braking situations, etc. The drive assembly comprises a motor part 11a, which is driven by the pump 10a. The assembly additionally includes a reduction gearing 11b. The units 11a and 11b can be constituted by a type which is known per se and will not therefore be described in detail here. The transmission of the drive function of the assembly 11 to the front wheel 3 is indicated diagrammatically by 18 and is achieved with positively connected gear teeth, so-called splines, in a manner which is known per se. The constructions of the rear and front wheels are otherwise realized in a manner which is known per se, which shall also be spared detailed description here. When the hydrostatic system is used, the pressure in the high pressure line 12 can be of the order of magnitude of 350 bar. With reference to normal running of the motorcycle, the rear wheel 2 rotates slightly faster than the front wheel and thereby gives rise to a propulsion force, symbolized by F, on the front wheel. The said accumulator 15 ensures that the low-pressure line 13 admits a minimum pressure, for example about 3 bar, throughout the propulsion.

According to the inventive concept, the arrangement is equipped with a bridging duct 19, which, as outlined below, can assume an open and a closed position. The bridging duct contains a thermostat 20 (shown in basic representation), which opens and closes the bridging duct. 19 in dependence on the temperature in the hydrostatic medium. The medium in the high-pressure line 12 is symbolized by the arrow 21 and the medium in the low-pressure duct 13 is symbolized by 22. The said medium can be constituted by hydraulic oil with associated conventional additives. The bridging direction in the duct 19 is denoted by 23. The said bridging function may have a different construction and can be assigned a different position within the system. In the present case, the bridging function is arranged in the drive assembly. The bridging function needs to operate only with a small medium flow differential (change in volume flow) from the high-pressure line 12 to the low-pressure line 13 in order to produce a large change in pressure. In Figure 1, a ground surface is additionally symbolized by 24.

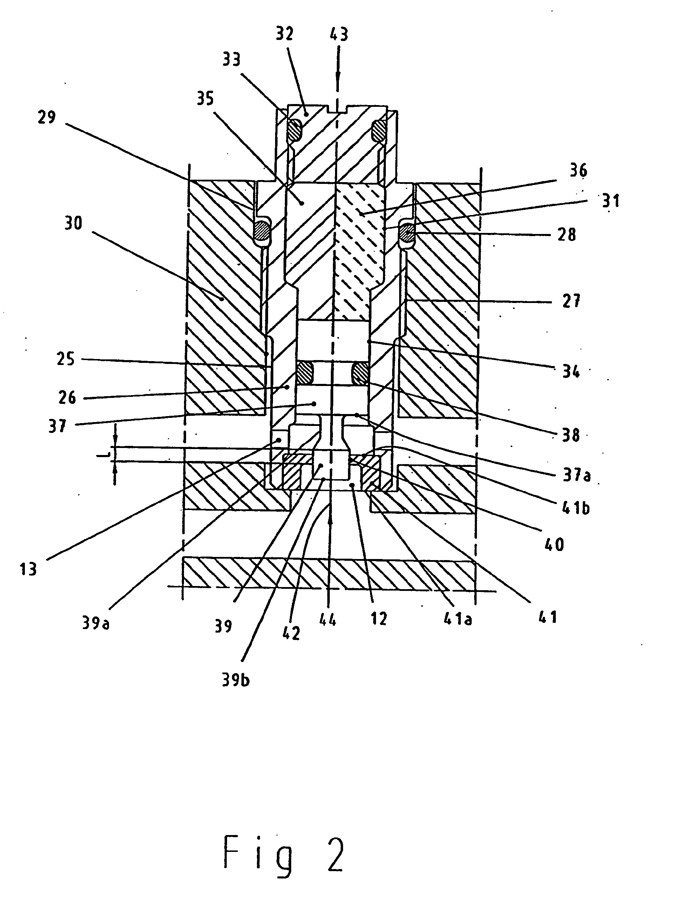

Figure 2 shows a constructional illustrative embodiment of the structure of a unit 25 equipped with, on the one hand, a thermostat function and, on the other hand, a connection and disconnection function for a bridging line according to Figure 1 (compare 19). The unit comprises a sleeve-shaped outer part 26 provided with an external thread 27, by means of which the unit is arranged in a screw-in manner in the drive assembly housing. The unit has an external seal 28, which seals against an inner wall 29 of a drive assembly housing 30 (indicated in basic representation). The unit is provided with an internal chamber 31, which can be closed off with a screw 32 sealed by a seal 33. The chamber 31 passes into a chamber 34 of smaller diameter or cross-sectional area than the chamber 31. In the chambers 31 and 34, a fluid medium 35 is applied. The medium can be constituted by hydraulic oil with any associated additives. Alternatively, the hydraulic oil can be replaced by wax(es) 36, which is/are known per se within the general context of thermostats. The hydraulic oil operates on the basis of a substantially even expansion and contraction function. The wax or waxes (the medium) has/have more distinct melting and solidification temperature ranges. The chamber 34 contains a cone 37, which is sealed against the chamber 34 by means of a sealing ring 38. At its end, the cone 37 has a needle-shaped or plug-shaped member 39, which extends down into a cutout 40 in a seat 41. In the position shown in Figure 2, the plug 39 has assumed a position which seals the cutout 40. The cone is arranged such that it is longitudinally displaceable along the centre line 42 of the unit, downwards in Figure 2. In its upper parts, the plug is equipped with a tapered part 39a. When the plug is displaced, by means of the cone, in the direction of the arrow 43, the tapered section 39a is placed opposite the cutout 40 in the seat, with the result that a passage is formed on the outside of the tapered part 39a of the plug and the seat hole 40. The bottom side 41a of the seat is connected to the high-pressure line 12 (see Figure 1) and the top side 41b of the seat is connected to the low-pressure line 13 (see Figure 1). In the position shown in Figure 2, the passage between the lines 12 and 13 is closed. If the plug is displaced and the passage is present between the outside 39a of the plug and the seat hole 40, the high and low-pressure lines are connected to each other, i.e. the bridging function is in place. The oil 35 or the wax(es) (= a first body) has/have linear expansion coefficients which result in the plug 39 being displaceable relative to the housing, the frame and the seat 41 (together forming a second body), which therefore have substantially smaller second linear expansion coefficients than the oil 35 and the wax(es) 36. The displacement takes place in the direction of the arrow 43 in dependence on the prevailing temperature in the unit. The linear expansion acts counter to the effect of counter-pressure in the direction of the arrow 44, which counter-pressure is produced by the high pressure on the bottom face 39b of the plug and the low pressure on the face 37a of the plug fastening in the cone 37. If the heat rises, the plug is therefore pressed downwards in Figure 2 and, at a degree of displacement L which can measure between 1 and 3 mm, preferably about 2 mm, the connection between the lines 12 and 13 is opened. The oil or wax bodies 35 and 36 therefore perform their linear expansion in dependence on indirect heat from the temperature in the medium in the high and low pressure lines. The unit 25 can be considered to operate on the basis of a bleeding or leakage function. In Figure 2, a part of the bridging duct is constituted by the passage between the plug 39 and the seat 41. The connections and the disconnections of the bridging line must be made within distinct temperature ranges, which are preferably chosen to be small, for example temperature ranges between 80°C and 85°C; 100°C and 105°C, etc. It will be appreciated that the arrangement involving wax/waxes can be realized with more distinct temperature ranges. The oil or wax body is actuated by means of thermal conduction in the second body 25, which can be made of aluminium, alloy, steel, etc. The housing or frame 25 is fitted in a suitable place on the motorcycle, for example the drive assembly housing 30, which, for its part, can also convey heat indirectly or directly to the oil or wax body and can assist in the connections and disconnections of the bridging.

In the illustrative embodiment shown, the bridging, bridging execution and temperature-detection functions have been integrated in the unit 25. These functions can, of course, be separated with respect to location. The bridging execution can alternatively be electrically controlled from the temperature detection and/or, in turn, electrically control the bridging. The parts 26, 37, 39 and 41 can be made of material having a substantially lower thermal expansion coefficient than the oil/wax(es) and can be constituted, for example, by the said material type. The wax or waxes can be replaced by means of an equivalent nature.

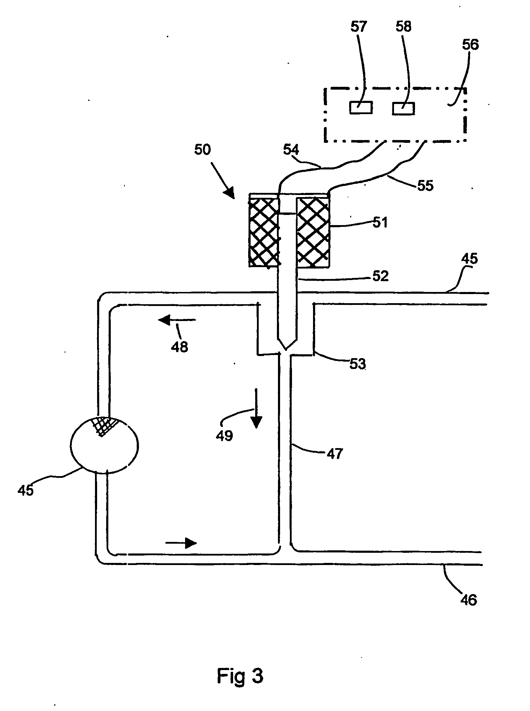

In Figure 3, a hydraulic motor is denoted by 45. A medium-conducting supply line has been indicated by 45 and a discharge line has been indicated by 46. The line 45 is connected to the outlet on a pump and the line 46 to the inlet of the pump. Arranged parallel with the hydraulic motor is a bridging line 47 for the medium. The primary flow to and from the motor 45 is indicated by arrows and a bleed flow in the line 47 is indicated by 49. A control member or control valve is indicated in basic representation by 50. The member/valve can be constituted by an electrically controlled unit in the form of a proportional valve, which can be constituted by a type which is known per se and can comprise a coil 51 and a needle 52, which operate against a seat 53 for bleed flow determination. The electric conductors 54 and 55 of the coil can be connected to an operating member, which, in dependence on manual or automatically controlled actions, determines the position of the needle in relation to the seat and hence the size of the bleed flow. The operating member can be constituted by a position-influencing member 57, thermostat 58, etc. Alternatively, the control member can be constituted by a mechanical member which can be correspondingly controlled. With the bleed function, the primary flow can be varied. The variation of the primary flow needs to be relatively small, for example 2-15%. When the vehicle is driven slowly and there is high pressure at the hydraulic motor, changes are made in the primary flow amounting to the 10% reduction. In normal driving on a main road, the flow reduction is in the order of magnitude of about 3%, etc. The control member can operate as a flow-changing or pressure-changing member. With the arrangement shown, the size of the front wheel drive can easily be varied, so that the size of the front wheel drive is altered in dependence on the driving conditions. The actuating members 57, 58 can be controlled by means of sensors, for example on the front and rear wheels, the throttle and/or a separate actuating member. The front-wheel drive can therefore be arranged such that it can be wholly or partially shut off. Pressure generators and temperature sensors for and in the oil/medium can also be provided. Wheel bearing sensors for detecting the air pressure in the wheels can also form part of the arrangement, as can spin-detecting sensors, etc.

The invention is not confined to the embodiment shown by way of example above but can be subject to modifications within the scope of the following patent claims and the inventive concept. In an further embodiment the actuating members can be controlled by voice operating device(-s).

## Claims

1. Device for use in a vehicle (1), for transmitting drive force (F) by means of a hydrostatic transmission arrangement (10, 11, 12, 13), the arrangement comprising a hydrostatic pump (10a), a hydrostatic drive assembly (11), connected to the pump by a hydrostatic line system (12, 13), for driving a wheel, and one or more members (19, 20) which wholly or partially bridge or disconnect or reconnect the drive assembly, which member(s) is/are arranged to directly or indirectly detect and/or influence driving situation(s) for the vehicle and, should changes occur, to cause or bring about the full or partial bridging or disconnection or reconnection of the assembly **characterized in that** the said member(s) (19, 20) comprise(s) a bridging duct (19), forming part of the hydrostatic line system, and a unit (20) arranged in the system and provided with a temperature-sensitive member and with members (39, 41) which connect and disconnect the bridging duct in dependence on the temperature.

2. Device according to Patent Claim 1, **characterized in that** the temperature-sensitive member(s) comprise(s) bodies (26 and 35 or 36) having different thermal expansion coefficients, and **in that** the connecting and disconnecting member(s) is/are arranged so as to be actuated by relative movements between the bodies.

3. Device according to Patent Claim 2, **characterized in that** the temperature-sensitive member(s) comprise(s) a first body consisting of fluid (35), for example hydraulic oil or wax(es) (36), and a second body (25) made of metal, for example aluminium, alloy, steel, etc., and **in that** the connecting and disconnecting members comprise a cone or needle, arranged such that it can be actuated by the said first body, and a seat (41) belonging to the cone or needle.

4. Device according to any one of Patent Claims 1, 2 or 3, **characterized in that** the body or bodies is/are chosen with thermal expansion coefficients and the cone and the seat are arranged to allow connections and disconnections within a small temperature range, for example between 80 and 85°C, 100 and 105°C, etc.

5. Device according to any one of the preceding patent claims, **characterized in that** it can be incorporated in a vehicle in which the wheels normally make contact with the ground or the underlying/supporting surface, and **in that** the bridging by the bridging member(s) causes only a minimal change, for example a 3% change, in a medium flow produced by the pump, and a consequential large change in pressure producing, for example, an approximate 1% drop in pressure where the first wheel(s) (2) drive(s) the second wheel(s) via the ground surface (24), which latter wheels therefore take over the driving from the system.

6. Device according to any one of the preceding patent claims, **characterized in that** a delay in the bridging or disconnection and reconnection is minimized to 0.1-1.0 seconds, preferably 0.1-0.2 seconds.

7. Device according to any one of the preceding patent claims, **characterized in that**, in a particular driving function of the vehicle, for example aerial travel, wheel-turning, tilting, etc., the arrangement is arranged to allow a first value for the bridging or disconnection and reconnection in an above the ground state, for example aerial travel, or a wheel-turning state or tilting state for the vehicle, and a second value for the bridging or disconnection and reconnection in a return from or adoption of states different from the respective said states.

## Patentansprüche

1. Vorrichtung zur Verwendung in einem Fahrzeug (1) zum Übertragen von Antriebskraft (F) mittels einer hydrostatischen Übertragungsanordnung (10, 11, 12, 13), wobei die Anordnung eine hydrostatische Pumpe (10a), eine hydrostatische Antriebseinheit (11) aufweist, die mit der Pumpe durch ein hydrostatisches Leitungssystem (12, 13) verbunden ist, um ein Rad anzutreiben, und ein oder mehrere Elemente (19, 20), die die Antriebseinheit ganz oder teilweise überbrücken oder abtrennen oder wiederverbinden, wobei das/die Element(e) eingerichtet ist/sind, um direkt oder indirekt Fahrsituation(en) für das Fahrzeug zu erfassen und/oder zu beeinflussen, und, falls Änderungen auftreten, das komplette oder teilweise Überbrücken oder Trennen oder Wiederverbinden der Einheit zu verursachen oder auszulösen, **dadurch gekennzeichnet, dass** das/die Elemente (19, 20) eine Überbrückungsleitung (19) aufweist/aufweisen, die Teil des hydrostatischen Leitungssystems bildet, und eine Einheit (20), die in dem System eingerichtet ist und mit einem temperaturempfindlichen Element versehen ist, und mit Elementen (39, 41), die die Überbrückungsleitung in Abhängigkeit von der Temperatur verbinden und trennen.

2. Vorrichtung nach Anspruch 1, **dadurch gekennzeichnet, dass** das/die temperaturempfindliche(n) Element(e) Körper (26 und 35 oder 36) aufweist/aufweisen, die unterschiedliche Wärmedehnungskoeffizienten haben, und dass das/die Verbindungs- und Trennelement(e) eingerichtet ist/sind, um durch relative Bewegungen zwischen den Körpern betätigt werden.

3. Vorrichtung nach Anspruch 2, **dadurch gekennzeichnet, dass** das/die temperaturempfindliche(n) Element(e) einen ersten Körper aufweist/aufweisen, der aus Fluid (35), zum Beispiel Hydrauliköl oder Wachs(en) (36) besteht, und einen zweiten Körper (25), der aus Metall hergestellt ist, zum Beispiel Aluminium, Legierung, Stahl usw., und dass das/die Verbindungs- und Trennelement(e) einen Kegel oder eine Nadel aufweisen, der/die derart eingerichtet ist, dass er/sie von dem ersten Körper betätigt werden kann, und einen Sitz (41), der zu dem Kegel oder der Nadel gehört.

4. Vorrichtung nach einem der Ansprüche 1, 2 oder 3, **dadurch gekennzeichnet, dass** der Körper oder die Körper mit Wärmedehnungskoeffizienten ausgewählt wird/werden und dass der Kegel und der Sitz eingerichtet sind, um Verbindungen und Trennungen innerhalb eines kleinen Temperaturbereichs zu erlauben, zum Beispiel zwischen 80 und 85 °C, 100 und 105 °C usw.

5. Vorrichtung nach einem der vorhergehenden Ansprüche, **dadurch gekennzeichnet, dass** sie in ein Fahrzeug eingebaut werden kann, bei dem die Räder normalerweise den Boden und/oder die darunter liegende/tragende Oberfläche berühren, und dass die Überbrückung durch das/die Überbrückungselement(e) nur eine minimale Änderung, zum Beispiel eine Änderung von 3 %, in einem Medienstrom verursacht, der von der Pumpe erzeugt wird, und eine daraus folgende Änderung im Druck, wie zum Beispiel ein Absenken von etwa 1 % des Drucks erzeugt, wenn das erste Rad/die ersten Räder (2) das zweite Rad/die zweiten Räder über die Bodenoberfläche (24) antreibt/antreiben, wobei letztere Räder daher das Antreiben von dem System übernehmen.

6. Vorrichtung nach einem der vorhergehenden Ansprüche, **dadurch gekennzeichnet, dass** die Frist in dem Überbrücken oder Trennen und Wiederverbinden auf 0,1-1,0 Sekunde, vorzugsweise 0,1-0,2 Sekunde minimiert ist.

7. Vorrichtung nach einem der vorhergehenden Ansprüche, **dadurch gekennzeichnet, dass** bei einer besonderen Antriebsfunktion des Fahrzeugs, zum Beispiel bei Luftfahrt, Raddrehung, Kippen usw., die Anordnung eingerichtet ist, um einen ersten Wert für das Überbrücken oder Trennen oder Wiederverbinden in einem Zustand oberhalb des Bodens, zum Beispiel Luftfahrt, oder ein Raddrehzustand oder Kippzustand für das Fahrzeug zu erlauben, und einen zweiten Wert für das Überbrücken oder Trennen und Wiederverbinden in einer Rückkehr von dem oder beim Annehmen von Zuständen, die von den jeweiligen Zuständen unterschiedlich sind.

## Revendications

1. Dispositif pour une utilisation dans un véhicule (1), pour transmettre un effort d'entraînement (F) au moyen d'un mécanisme de transmission hydrostatique (10, 11, 12, 13), le dispositif comprenant une pompe hydrostatique (10a), un mécanisme d'entraînement hydrostatique (11), relié à la pompe par un système de conduite hydrostatique (12,13), pour entraîner une roue, et un ou plusieurs éléments (19, 20) qui dérivent ou déconnectent ou reconnectent partiellement ou entièrement le mécanisme d'entraînement, lequel(lesquels) élément (s) est/sont disposés pour détecter directement ou indirectement et/ou influencer une (des) situation(s) d'entraînement pour le véhicule et, si des changements se produisent, pour entraîner ou provoquer la dérivation ou la déconnexion ou la reconnexion partielle ou complète du mécanisme, **caractérisé en ce que** ledit(lesdits) élément(s) (19, 20) comprend (comprennent) un conduit de dérivation (19), faisant partie du système de conduite hydrostatique, et une unité (20) placée dans le système et munie d'un élément sensible à la température et avec des éléments (39, 41) qui connectent et déconnectent le conduit de dérivation selon la température.

2. Dispositif selon la revendication de brevet 1, **caractérisé en ce que** l'élément(les éléments) sensible(s) à la température comprend(comprennent) des corps (26 et 35 ou 36) ayant différents coefficients d'expansion thermique, et **en ce que** l'élément(les éléments de connexion ou de déconnexion est/sont disposés de manière à être actionnés par des mouvements relatifs entre les corps.

3. Dispositif selon la revendication de brevet 2, **caractérisé en ce que** l'élément(les éléments) sensible(s) à la température comprend(comprennent) un premier corps consistant en du liquide (35), par exemple de l'huile hydraulique ou de la cire(des cires) (36) er un second corps (25) fait de métal, par exemple, de l'aluminium, de l'alliage, de l'acier, etc. et **en ce que** les éléments de connexion et de déconnexion comprennent un cône ou une aiguille, disposés de manière à pouvoir être actionnés par ledit premier corps, et un siège (41) appartenant au cône ou à l'aiguille.

4. Dispositif selon l'une quelconque des revendications de brevet 1, 2 ou 3, **caractérisé en ce que** le corps ou les corps est/sont choisis avec des coefficients d'expansion thermique et que le cône et le siège sont disposés de manière à autoriser des connexions et des déconnexions dans une petite plage de température, par exemple entre 80 et 85°C, 100 et 105°C, etc.

5. Dispositif selon l'une quelconque des revendications de brevet précédentes, **caractérisé en ce qu'**il peut être intégré dans un véhicule dans lequel les roues entrent normalement en contact avec le sol ou la surface sous-jacente/ de support, et **en ce que** la dérivation par l'élément(les éléments) de dérivation entraînent uniquement un changement minimal, par exemple un changement de 3%, dans un débit moyen produit par la pompe, et un grand changement consécutif dans la production de pression, par exemple, une chute d'environ 1 % dans la pression où la(les) première(s) roue(s) (2) entraîne(nt) la(les) seconde(s) roue(s) par la surface de sol (24) laquelle dernière roue prend le contrôle de l'entraînement depuis le système.

6. Dispositif selon l'une quelconque des revendications de brevet précédentes, **caractérisé en ce qu'**un retard dans la dérivation ou la déconnexion et la reconnexion est réduit à 0,1-1,0 secondes, préférablement 0.1-0,2 secondes.

7. Dispositif selon l'une quelconque des revendications de brevet précédentes, **caractérisé en ce que**, dans une fonction particulière d'entraînement du véhicule, par exemple parcours aérien, parcours de roue, basculement, etc., le mécanisme est disposé pour permettre une première valeur pour la dérivation ou la déconnexion et la reconnexion dans un état au-dessus du sol, par exemple un état de parcours aérien, parcours de roue, ou un état de basculement pour le véhicule, et une seconde valeur pour la dérivation ou la déconnexion et la reconnexion dans un retour depuis ou l'adoption des états différents desdits états respectifs.
